# EUROPÄISCHE PATENTSCHRIFT

(11) **EP 1 301 112 B1**
(45) Veröffentlichungstag und Bekanntmachung des Hinweises auf die Patenterteilung: **23.04.2008**
(21) Anmeldenummer: 01949458.2
(22) Anmeldetag: 02.07.2001
(51) Int. Cl.: A47J 31/44

(54) **KAFFEEMASCHINE MIT VERBESSERTER BLENDENHALTERUNG**
COFFEE MACHINE COMPRISING IMPROVED FIXING OF THE COVER
MACHINE A CAFE DOTEE D'UN SYSTEME DE FIXATION AMELIORE DESTINE AU COUVERCLE

(30) Priorität: 07.07.2000 DE 10033090
(43) Veröffentlichungstag der Anmeldung: 16.04.2003
(73) Patentinhaber: BSH Bosch und Siemens Hausgeräte GmbH, 81739 München (DE)
(72) Erfinder: KAISER, Helmut, 82515 Wolfratshausen (DE)
(86) Internationale Anmeldenummer: PCT/EP2001/007567
(87) Internationale Veröffentlichungsnummer: WO 2002/003841

(56) Entgegenhaltungen:
- DE-U- 8 912 045
- US-A- 5 239 914
- US-A- 5 687 636

## Beschreibung

Die Erfindung betrifft eine Kaffeemaschine gemäß dem Oberbegriff des Patentanspruchs 1.

Eine gattungsbildende Kaffeemaschine wird durch die Kaffeemaschine der Firma Philips mit der Typbezeichnung 7502, Cucina dargestellt, bei der eine Blende über Schnapphaken in Ausnehmungen eines schwenkbaren Filterhalters eingehakt ist.

DE 8 912 045 U veröffentlicht eine Kaffeemaschine mit einer Blende die über Haltemittel lösbar an Gehaüsekörper befestigt ist.

Die Aufgabe der Erfindung besteht darin, eine verbesserte Halterung der Blende an der Kaffeemaschine zu ermöglichen.

Die Aufgabe der Erfindung wird durch die Merkmale des Anspruchs 1 gelöst. Vorzugsweise weist die Blende mindestens eine Seitenfläche auf, die seitlich mindestens teilweise an einem Aufnahmeraum für eine Kaffeekanne entlang geführt ist und die Seitenfläche mit einem lösbaren Haltemittel mit dem Gehäusekörper im Bereich des Aufnahmeraums verbunden ist. Diese Ausführungsform bietet den wesentlichen Vorteil, daß aufgrund der Ausbildung der Seitenfläche ein größerer Frontbereich der Kaffeemaschine optisch gestaltet wird. Zudem bietet die Befestigung der Seitenfläche am Gehäusekörper insgesamt eine verbesserte Befestigung der Blende an der Kaffeemaschine.

In einer bevorzugten Ausführungsform weist der Sockel der Kaffeemaschine eine Ausnehmung auf, in die die Seitenfläche eingreift. Durch Verwendung der Ausnehmung im Sokkel wird eine weitere Fixierung der Seitenfläche ermöglicht, so daß die Befestigung der Blende zusätzlich stabilisiert wird. Weiterhin ist es aufgrund der Ausnehmung möglich, unterschiedlich lange Seitenflächen an einer Kaffeemaschine zu befestigen, wobei die unterschiedlich langen Enden der Seitenflächen unsichtbar in der Ausnehmung verschwinden. Zudem bietet die Verwendung der Ausnehmung im Sockel die Möglichkeit, unterschiedlich hohe Kaffeemaschinen mit ein und derselben Blende zu versehen, wobei die unterschiedliche Höhenposition der Blenden dadurch ausgeglichen wird, daß das Endstück der Seitenfläche in die Ausnehmung des Sockels eingeschoben wird. Auf diese Weise reicht es aus, eine Art von Blende für unterschiedlich hohe Kaffeemaschinen bereitzustellen. Dies ermöglicht eine besonders kostengünstige Herstellung der Kaffeemaschine.

Weitere vorteilhafte Ausführungsformen der Erfindung sind in den abhängigen Ansprüchen angegeben.

Eine bevorzugte Ausführungsform des Haltemittels ist die Ausbildung in Form eines Hakens an der Blende und in Form einer Ausnehmung am Gehäuse der Kaffeemaschine. Auf diese Weise ist die Blende einfach durch ein Einhaken des Hakens in der Ausnehmung des Gehäuses montierbar und ebenso einfach wieder demontierbar.

In einer bevorzugten Ausführungsform werden jeweils zwei Haltemittel auf gleicher Höhe im Filterbereich seitlich eines Filterhalters und jeweils zwei Haltemittel auf gleicher Höhe im Bereich des Aufnahmeraums an zwei den Aufnahmeraum begrenzenden Frontseiten des Gehäusekörpers angeordnet. Aufgrund dieser vorteilhaften Anordnung der Haltemittel ist eine sichere Befestigung der Blende am Gehäusekörper möglich, wobei die Blende über ihre Außenkante gleichmäßig am Gehäusekörper anliegt.

In einer bevorzugten Ausführungsform weist die Blende zwei Seitenflächen auf, die jeweils seitlich am Aufnahmeraum entlang geführt sind und mit jeweils einem Endstück in eine Ausnehmung des Sockels eingreifen. Die Verwendung einer Blende mit zwei Seitenflächen ermöglicht eine weitgehende Gestaltung der Frontseite der Kaffeemaschine. Zudem ist durch das Eingreifen der Endstücke der Seitenflächen in die Ausnehmungen des Sockels eine genaue und präzise Fixierung der Seitenflächen am Gehäusekörper möglich.

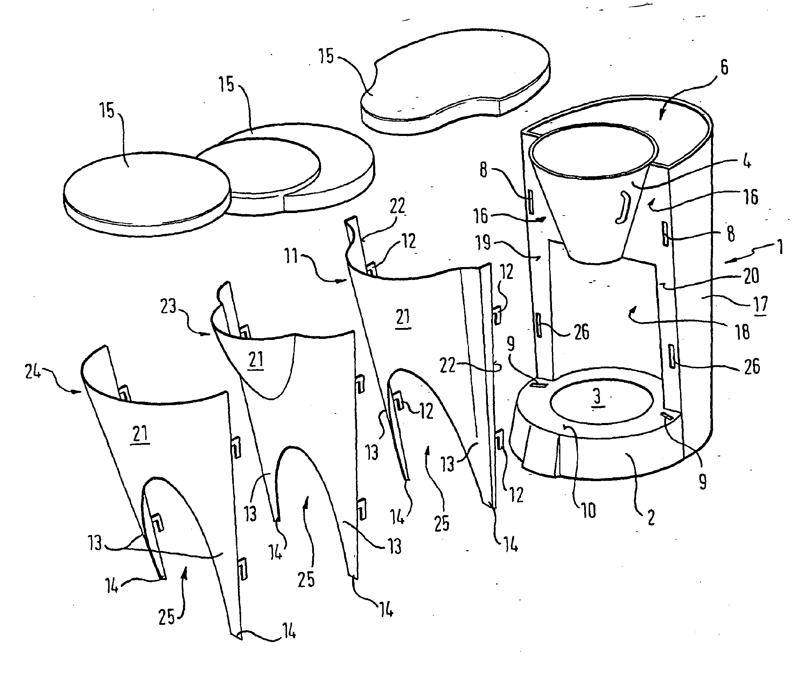

Die Erfindung wird im folgenden anhand der Figur näher erläutert.

Die Figur zeigt eine schematische, perspektivische Darstellung eines Gehäusekörpers einer Kaffeemaschine mit drei unterschiedlichen Ausbildungsformen einer Blende und drei unterschiedlichen Ausführungsformen einer Abdeckung.

Die Figur zeigt einen Gehäusekörper 1 einer Kaffeemaschine, der einen Sockel 2, einen Körper 17 und einen nicht schwenkbaren Filterhalter 4 aufweist. Der Sockel 2 weist eine Heizplatte 3 auf oder, falls eine Thermokannenmaschine realisiert werden soll, eine entsprechende Abstellplatte auf. Von dem Sockel 2 geht ein Körper 17 aus, der sich nach oben erstreckt und im oberen Bereich den Filterhalter 4 aufweist. Im Körper 17 ist ein Wassertank 6 integriert. Der Körper 17 weist unterhalb des Filterhalters 4 eine teilzylindrische Ausnehmung 18 auf, die einen Aufnahmeraum zum Einstellen einer Kaffee-Glaskanne oder Thermokanne darstellt. Der Körper 17 steht mit einer halbovalen Bodenfläche auf einem teilringförmigen Aussenrandbereich einer Oberseite 10 des Sockels 2 auf. Auf der Oberseite 10 ist mittig eine Heizplatte 3 angeordnet. Der Körper 17 weist eine Frontfläche 16 auf, die nahezu senkrecht zur Oberseite 10 angeordnet ist und über dem Sockel 2 ausgebildet ist. Die Frontfläche 16 teilt sich in eine erste und eine zweite Teilfrontfläche 19, 20 auf, die an gegenüberliegenden Seiten von der Oberseite 10 des Sockels 2 ausgehen und nach oben seitlich am Aufnahmeraum vorbei bis zum oberen Rand des Filterhalters 4 geführt sind. In der ersten und der zweiten Teilfrontfläche 19, 20 ist auf gleicher Höhe im Bereich des Filterhalters 4 jeweils eine erste Ausnehmung 8 in Form eines vertikalen Längsschlitzes eingebracht. Zudem sind im Bereich der Ausnehmung 18 zwei weitere Ausnehmungen 26 auf gleicher Höhe in der ersten und in der zweiten Teilfrontfläche 19, 20 in Form von vertikalen Längsschlitzen eingebracht.

Die Oberseite 10 des Sockels 2 weist nahe an der ersten und der zweiten Teilfrontfläche 19, 20 zwei zweite Ausnehmungen 9 in Form von Schlitzen auf. Die Form der zweiten Ausnehmung 9 ist an den.Querschnitt der Endstücke 14 der Seitenflächen 13 angepaßt, so daß die Endstücke 14 vorzugsweise passgenau in die zweite Ausnehmungen 9 eingeschoben werden können. Die zweiten Ausnehmungen 9 sind in der Weise auf der Oberseite 10 angeordnet, daß eine Blenden 11, 23, 24 im montierten Zustand im Bereich der Oberseite 10 formschlüssig an der Frontseite 16 mit der Seitenkante 22 anliegt.

In der Figur ist vor dem Gehäusekörper 1 eine erste Blende 11 dargestellt, die eine Hauptfläche 21 aufweist, von der nach unten zwei getrennte Seitenflächen 13 ausgehen. Die Seitenflächen 13 stellen eine Verlängerung der der Hauptfläche nach unten dar. Die zwei Seitenfläche 13 begrenzen mit der Hauptfläche 21 eine halbovale Teilöffnung 25. Die Teilöffnung 25 ist im montierten Zustand der ersten Blende 11 vor der Ausnehmung 18 angeordnet und legt die Öffnungsgröße des Aufnahmeraums fest. Die Blende 11 ist im Querschnitt als gebogene Platte ausgeführt, an deren Seitenkanten 22 jeweils zwei Haken 12 ausgebildet sind. Die Haken 12 einer Seitenkante 22 weisen einen Abstand auf, der dem Abstand der Ausnehmungen 8 einer Teilfrontfläche 19, 20 entspricht.

Die Figur zeigt eine zweite und eine dritte Blende 23, 24, die sich in ihrer Form im wesentlichen im Bereich der Hauptfläche 21 von der ersten Blende 11 unterscheidet, wobei jedoch die zweite und die dritte Blende 23, 24 auch Haken 12 an den jeweiligen Seitenkanten aufweisen. Zudem weisen die zweite und die dritte Blende 23, 24 ebenfalls eine Hauptfläche 21 auf, die in zwei Seitenflächen 13 übergehen, die eine Teilöffnung 25 begrenzen. Die Ausbildung der Hauptfläche 21 und/oder die Teilflächen 13 sind bei den Blenden 11, 23, 24 unterschiedlich ausgebildet, um bei einem gleichen Grundkörper ein unterschiedliches Erscheinungsbild der Kaffeemaschine zu ermöglichen. Die Abstände der zwei Haken 12 einer Seitenkante 22 der zweiten und der dritten Blende 23, 24 weisen einen Abstand voneinander auf, der dem Abstand zweier Ausnehmungen 8 einer Teilfrontfläche 19, 20 entspricht. Je nach Wahl der Blende wird bei gleichem Grundkörper eine Kaffeemaschine erhalten, deren Erscheinungsbild unterschiedlich ist.

Die erste, zweite und dritte Blende 11, 23, 24 sind in der Weise ausgebildet daß bei einer in die Ausnehmungen 8,26 eingehängte Blende ein unteres Endstück 14 der Seitenflächen 13 in die entsprechend ausgeformten zweiten Ausnehmungen 9 eingreift. Auf diese Weise wird die Blende zusätzlich zu den vier Haken über die zweite Ausnehmung 9 fixiert und gehalten. Diese Befestigungsart ermöglicht eine präzise Anlage im Kantenbereich der Blenden 11, 23, 24 an die Frontfläche 16.

Weiterhin bietet die Verwendung der zweiten Ausnehmung 9 die Möglichkeit, unterschiedlich hohe Gehäusekörper 1 mit einer Blende 11, 23, 24 mit festgelegter Höhe zu versehen, wobei je nach Höhe des Gehäusekörpers 1 die Blende 11, 23 , 24 unterschiedlich tief in die zweite Ausnehmung 9 mit den Endstücken 14 eingeschoben wird. Damit wird eine kostengünstige Fertigung verschiedener Kaffeemaschinen mit einer einheitlich hohen Blende ermöglicht. Beispielsweise unterscheiden sich Kaffeemaschinen inder Höhe, wenn bei dem gleichen Kaffeemaschinentyp anstelle einer Glaskanne eine deutlich höher bauende Thermoskanne angeordnet ist.

Der Haken 12 und die zugeordnete Ausnehmung 8 stellen ein lösbares Haltemittel dar, mit dem die Blenden 11, 23, 24 am Gehäusekörper 1 befestigt werden. Aufgrund der Verwendung der vier Ausnehmungen 8,26 und der vier Haken 12 ist eine sichere Befestigung der Blenden 11, 23, 24 am Gehäusekörper 1 möglich, wobei die Blenden 11, 23, 24 aufgrund ihrer Form nicht nur den Filterhalter 4, sondern auch den Aufnahmeraum seitlich mit mindestens einer Seitenfläche 13 begrenzen und teilweise abdecken. Somit ist eine weitgehende optische Prägung der Kaffeemaschine durch die Blenden 11, 23, 24 möglich. Aufgrund der weiteren Ausnehmungen 26 und der entsprechend zugeordneten Haken 12 wird eine über die gesamte Seitenkante der Blende 11, 23, 24 formschlüssige Anlage der Blende an die Teilfrontfläche 19, 22 ermöglicht. Dabei sind die AUsnehmungen 8 außerhalb des Wassertankes angeordnet, um Abdichtungsprobleme zu vermeiden. Zusätzlich oder alternativ zu dem dargestellten Haken 12 können die Blenden 11, 23, 24 auch nicht gezeigte Haken aufweisen, die am oberen Rand der Blende angeordnet sind. Diese Haken greifen dann im oberen Randabschnitt des Gehäusekörpers 1 ein.

In der Figur sind in perspektivischer Darstellung drei Varianten von Abdeckungen 15 dargestellt, die sich entsprechend der unterschiedlichen Formen der Blenden 11, 23, 24 auch in ihrer Form unterscheiden und zum Auflegen auf den Gehäusekörper 1 und die Blenden 11, 23, 24 dienen.

In einer weiteren Ausführungsform weist der Gehäusekörper 1 nur die ersten Ausnehmungen 8 seitlich des Filterhalters 4 und die zweiten Ausnehmungen 9 auf. Entsprechend weist auch die am Gehäusekörper 1 montierte Blende 11, 22, 23 nur obere Haken 12 auf, die in die ersten Ausnehmungen 8 eingehakt sind. Die Endstücke 14 der Blende 11, 22, 23 sind im montierten Zustand der Blenden 11,23,24 in die zweiten Ausnehmungen 9 eingesteckt.

Eine weitere Ausführungsform der Erfindung besteht darin, daß die Blende nur eine Seitenfläche 13 aufweist und nur diese eine Seitenfläche 13 mit einem Endstück im montierten Zustand am Gehäusekörper 1 in eine entsprechende zweite Ausnehmung 9 eingeschoben ist.

## Patentansprüche

1. Kaffeemaschine mit einem Gehäusekörper (1), der einen Sockel (2) und einen über dem Sockel angeordneten Filterbereich aufweist,
wobei zwischen dem Sockel und dem Filterbereich ein Aufnahmeraum für eine Kaffeekanne ausgebildet ist,
wobei eine Blende (11, 23, 24) vorgesehen ist, die über Haltemittel (8, 12, 26) lösbar im Filterbereich am Gehäusekörper befestigt ist,
wobei die Blende an der Frontseite der Kaffeemaschine angeordnet ist,
**dadurch gekennzeichnet,**
**daß** der Sockel (2) eine Ausnehmung (9) aufweist, daß die Blende (11, 23, 24) mindestens eine Seitenfläche (13) aufweist, die seitlich am Aufnahmeraum entlang geführt ist, und
**daß** die Seitenfläche (13) mit jeweils mindestens einem Haltemittel (26, 8) lösbar mit dem Gehäusekörper (1) im Bereich des Aufnahmeraumes verbunden ist.

2. Kaffeemaschine nach Anspruch 1, **dadurch gekennzeichnet,**
**daß** sich die Blende (11, 23, 24) bis zum Sockel (2) erstreckt und mit einem Endstück (14) in die Ausnehmung (9) eingreift.

3. Kaffeemaschine nach einem der Ansprüche 1 oder 2, **dadurch gekennzeichnet,**
**daß** das Haltemittel in Form einer Ausnehmung (8, 26) und eines Haken (12) ausgebildet ist, wobei die Ausnehmung (8) in eine Wandung des Gehäusekörpers (1) eingebracht ist und der Haken (12) an der Blende ausgebildet ist.

4. Kaffeemaschine nach Anspruch 3, **dadurch gekennzeichnet, daß** zwei Ausnehmungen (8) auf annähernd gleicher Höhe im Bereich eines Filterhalters am Gehäusekörper (1) ausgebildet sind, und
daß zwei weitere Ausnehmungen (26) auf annähernd gleicher Höhe im Bereich des Aufnahmeraumes an zwei den Aufnahmebereich begrenzenden Teilfrontflächen (19, 20) des Gehäusekörper (1) ausgebildet sind.

5. Kaffeemaschine nach einem der Ansprüche 2 bis 4, **dadurch gekennzeichnet, daß** die Blende (11,23,24) zwei Seitenflächen (13) aufweist, daß die zwei Seitenflächen (13) jeweils seitlich an dem Aufnahmeraum entlang geführt sind und mit jeweils einem Endstück (14) in eine zweite Ausnehmung (9) am Sockel (2) eingreifen.

6. Kaffeemaschine nach einem der Ansprüche 1 bis 5, **dadurch gekennzeichnet, daß** die Ausnehmung (9) des Sockels (2) auf einer Oberseite (10) des Sockels (2) ausgebildet ist, die dem Aufnahmeraum zugeordnet ist.

7. Kaffeemaschine nach Anspruch 6, **dadurch gekennzeichnet, daß** die Ausnehmu,ng (9) auf der Oberseite (10) nahe an der ersten und zweiten Teilfrontfläche (19, 20) ausgebildet ist, so daß die Blende (13, 14, 11) bündig an der Teilfrontfläche (19, 20) gehalten wird.

## Claims

1. Coffee machine with a housing body (1), which comprises a base (2) and a filter region arranged above the base, wherein a receiving space for a coffee can is formed between the base and the filter region, wherein a screen (11, 23, 24), which is detachably fastened by way of retaining means (8, 12, 26) to the housing body in the filter region, is provided, and wherein the screen is arranged at the front side of the coffee machine, **characterised in that** the base (2) has a recess (9), that the screen (11, 23, 24) has at least one side surface (13) led laterally along at the receiving space and that the side surface (13) is detachably connected with the housing body (1) in the region of the receiving space by at least one respective retaining means (26, 8).

2. Coffee machine according to claim 1, **characterised in that** the screen (11, 23, 24) extends as far as the base (2) and engages by an end member (14) in the recess (9).

3. Coffee machine according to one of claims 1 and 2, **characterised in that** the retaining means is constructed in the form of a recess (8, 26) and a hook (12), wherein the recess (8) is formed in a wall of the housing body (1) and the hook (12) is constructed at the screen.

4. Coffee machine according to claim 3, **characterised in that** two recesses (8) are formed at approximately the same height in the region of a filter holder at the housing body (1) and that two further recesses (26) are formed at approximately the same height in the region of the receiving space at two part front surfaces (19, 20), which bound the receiving region, of the housing body (1).

5. Coffee machine according to one of claims 2 to 4, **characterised in that** the screen (11, 23, 24) has two side surfaces (13) and that the two side surfaces (13) are each led laterally along the receiving space and each engage by an end member (14) in a second recess (9) at the base (2).

6. Coffee machine according to one of claims 1 to 5, **characterised in that** the recess (9) of the base (2) is formed on an upper side (10) of the base (2), which is associated with the receiving space.

7. Coffee machine according to claim 6, **characterised in that** the recess (9) is formed on the upper side (10) near the first and second part front surfaces (19, 20) so that the screen (13, 14, 11) is retained flushly at the part front surface (19, 20).

## Revendications

1. Machine à café comprenant un corps de boîtier (1), qui présente un socle (2) et une zone de filtrage disposée au-dessus du socle,
un espace de logement pour une cafetière étant réalisé entre le socle et la zone de filtrage, un obturateur (11, 23, 24) étant prévu, lequel est fixé par des moyens de retenue (8, 12, 26) de façon amovible dans la zone de filtrage sur le corps de boîtier,
l'obturateur étant disposé sur le côté avant de la machine à café,
**caractérisée en ce que**
le socle (2) présente un évidement (9) de telle sorte que l'obturateur (11, 23, 24) présente au moins une face latérale (13) qui est guidée latéralement le long de l'espace de logement,
et **en ce que** la face latérale (13) est reliée à chaque fois par au moins un moyen de retenue (26, 8) de façon amovible au corps de boîtier (1) dans la zone de l'espace de logement.

2. Machine à café selon la revendication 1, **caractérisée en ce que** l'obturateur (11, 23, 24) s'étend jusqu'au socle (2) et s'engage par une pièce d'extrémité (14) dans l'évidement (9).

3. Machine à café selon l'une quelconque des revendications 1 ou 2, **caractérisée en ce que** le moyen de retenue est réalisé sous la forme d'un évidement (8, 26) et d'un crochet (12), l'évidement (8) étant introduit dans une paroi du corps de boîtier (1) et le crochet (12) étant réalisé sur l'obturateur.

4. Machine à café selon la revendication 3, **caractérisée en ce que** deux évidements (8) sont réalisés à une hauteur approximativement identique dans la zone d'un porte-filtre sur le corps de boîtier (1), et
**en ce que** deux autres évidements (26) sont réalisés à une hauteur approximativement identique dans la zone de l'espace de logement sur deux faces avant partielles (19, 20), délimitant l'espace de logement, du corps de boîtier (1).

5. Machine à café selon l'une quelconque des revendications 2 à 4, **caractérisée en ce que** l'obturateur (11, 23, 24) présente deux faces latérales (13), **en ce que** les deux faces latérales (13) sont guidées à chaque fois sur le côté le long de l'espace de logement et s'engagent avec à chaque fois une pièce d'extrémité (14) dans un second évidement (9) sur le socle (2).

6. Machine à café selon l'une quelconque des revendications 1 à 5, **caractérisée en ce que** l'évidement (9) du socle (2) est réalisé sur un côté supérieur (10) du socle (2) qui est attribué à l'espace de logement.

7. Machine à café selon la revendication 6, **caractérisée en ce que** l'évidement (9) est réalisé sur le côté supérieur (10) à proximité de la première et de la seconde face avant partielle (19, 20), de sorte que l'obturateur (13, 14, 11) est maintenu au même niveau que la face avant partielle (19, 20).
